# EUROPÄISCHE PATENTSCHRIFT

(11) **EP 0 372 529 B1**
(45) Veröffentlichungstag und Bekanntmachung des Hinweises auf die Patenterteilung: **28.07.1993**
(21) Anmeldenummer: 89122488.3
(22) Anmeldetag: 06.12.1989
(51) Int. Cl.: B23K 9/28, B23K 9/16

(54) **Schutzgasdüse für einen Schutzgasschweissbrenner mit einer auf dem Stromkontaktrohr vorgesehenen Isolierhülse**
Protective gas nozzle for a gas-shielded welding torch with an insulating sheath at the current-contacting tube
Buse à gaz protecteur pour une torche de soudage sous protection gazeuse avec une gaine isolante prévue sur le tube contacteur de courant

(30) Priorität: 08.12.1988 DE 3841326
(43) Veröffentlichungstag der Anmeldung: 13.06.1990
(73) Patentinhaber: FRIEDRICH, Bernd, D-87494 Rückholz (DE); Hug, Klaus-Dieter, D-77972 Mahlberg-Orschweier (DE)
(72) Erfinder: Schulz, Umbert, D-76275 Ettlingen (DE)
(74) Vertreter: Potten, Holger

(56) Entgegenhaltungen:
- EP-A- 0 109 479
- CH-A- 345 704
- DE-B- 2 920 917

## Beschreibung

Die vorliegende Erfindung bezieht sich auf eine Schutzgasdüse für einen Schutzgasschweißbrenner nach dem Oberbegriff des Patentanspruchs 1.

Eine derartige Schutzgasdüse ist aus der DE-B2-29 20 917 bekannt und hat sich in der Praxis im großen und ganzen hervorragend bewährt. Ein Problem besteht jedoch darin, daß aufgrund von sogenannten Schweißspritzern oder Schweißperlen, die an der freien Stirnseite der Schutzgasdüse anbacken, immmer wieder Arbeitsunterbrechungen erforderlich werden, in denen dann die Schutzgasdüse wieder gereinigt wird. Dieses Problem tritt insbesondere in Verbindung mit der freien Stirnseite der Isolierhülse, d.h. am Austrittspunkt der abschmelzenden Draht-Elektrode auf, zumal in diesem Bereich auch die stärkste Hitzeentwicklung an der Schutzgasdüse zu verzeichnen ist. Beim Säübern dieses Bereichs besteht dabei insbesondere die Gefahr, daß die Isolierhülse, die im allgemeinen aus einem technischen Keramikwerkstoff besteht, stirnseitig ausbricht und somit unbrauchbar wird.

Die der vorliegenden Erfindung zugrunde liegende Aufgabe besteht darin, die gattungsgemäße Schutzgasdüse dahingehend zu verbessern bzw. weiterzubilden, daß die Isolierhülse entweder nicht als Ganzes unbrauchbar wird, oder von vornherein so konzipiert ist, daß sich Schweißspritzer gar nicht erst festsetzen.

Diese Aufgabe wird erfindungsgemäß durch die im Patentanspruch 1 spezifizierte Ausbildung der Isolierhülse gelöst. Damit wird erreicht, daß gegebenenfalls nur die stirnseitige Verschleißhülse und nicht die gesamte Isolierhülse ausgetauscht werden muß.

Besteht die Verschleißhülse dabei aus z.B. Bornitrid, also einem Keramikwirkstoff mit den physikalischen Eigenschaften hohe Temperaturfestigkeit, gute Wärmeleitfähigkeit, hoher spezifischer Widerstand und geringer dielektrischer Verlustfaktor, so läßt sich von vornherein das Anbacken von Schweißspritzern weitestgehend vermeiden. Die Verschleißhülse kann dabei so ausgebildet sein, daß sie gleichermaßen wie der Isoliermantel auf das Stromkontaktrohr aufgeschraubt und somit wieder lösbar verbunden ist, oder daß sie über eine Ringnut und über eine komplementäre Nase an der Schutzkontaktdüse lösbar mit dieser verbunden ist. Es ist darüberhinaus auch denkbar, an bzw. in die Stirnseite der ein deren Form angepaßtes Formteil aus z.B. Bornitrid einzusetzen. Als Keramikwerkstoff kann beispielsweise auch Siliziumnitrid verwendet werden.

In weiterer Ausbildung der gattungsgemäßen Schutzgasdüse ist vorgesehen, den Bereich der freien Stirnseite der Schutzgasdüse selbst mit einem Keramikwerkstoff der vorgenannten Eigenschaften zu beschichten oder in den stirnseitigen Bereich einen separaten Verschleißeinsatz einzusetzen, der ebenfalls aus dem genannten Schweißspritzer abweisenden Keramikmaterial besteht.

Die Erfindung wird im folgenden anhand der Zeichnung näher erläutert. Diese zeigt in
- Fig. 1: eine als Flachdüse ausgebildete Schutzgasdüse mit einer zweigeteilten Isolierhülse;
- Fig. 2: eine Einzeldarstellung einer auf ein Stromkontaktrohr aufgesetzten zweiteiligen Isolierhülse;
- Fig. 3: eine als Runddüse ausgebildete Schutzgasdüse mit einem eingesetzten isolierten Verschleißeinsatz.

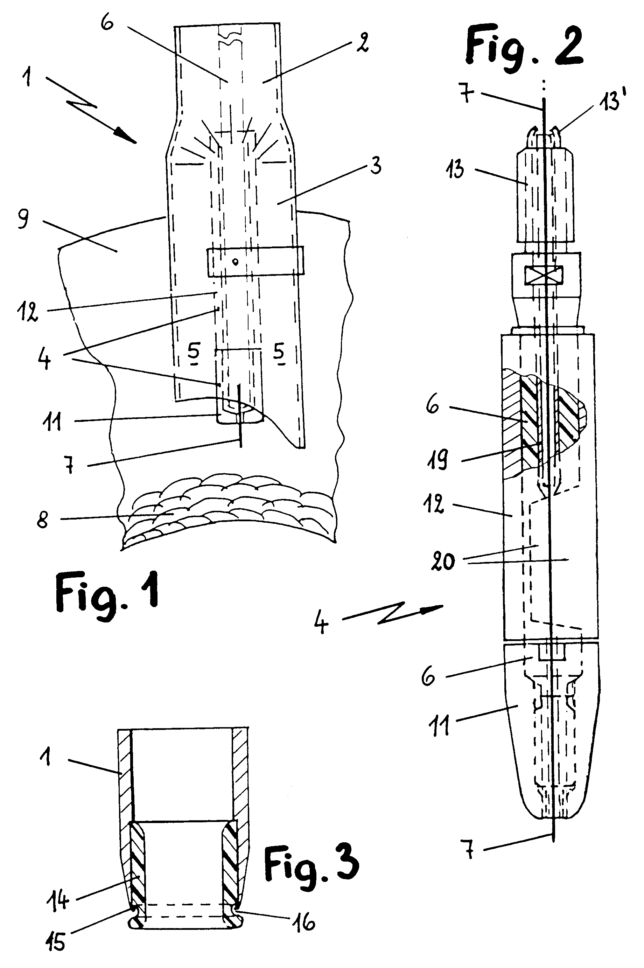

Fig. 1 zeigt eine Schutzgasdüse 1, die aus einem zylindrischen Rohransatz 2 und einer an diesem Rohransatz 2 angeformten Flachdüse 3 besteht. Der Rohransatz 2 ist so ausgebildet und durchmessermäßig so dimensioniert, daß er auf eine - nicht dargestellte - Schutzgaszuführung bzw. einen Brennerkopf eines Schweißbrenners aufgesteckt und mit dieser bzw. diesem fest verbunden werden kann. Die Flachdüse 3 ist - wie aus der DE-B2- 29 20 917 bekannt - so geformt, daß eine axial symmetrische Rundführung für eine Isolierhülse 4 entsteht, an die diametral zueinander zwei flache Einzelkanäle 5 anschließen.

Das Isolierrohr 4 nimmt ein Stromkontaktrohr 6 auf, das durch den genannten zylindrischen Rohransatz 2 und die Schutzgaszuführung zum Schweißbrenner geführt ist, und das eine zentrische Bohrung aufweist, durch die eine abschmelzende Draht-Elektrode 7 zugeführt wird.

Diese Draht-Elektrode 7 steht über die freie Stirnseite der Flachdüse 3 vor und wird beim Schweißvorgang selbst, d.h. mit dem Abschmelzen kontinuierlich nachgeführt. Das Abschmelzen des Elektrodenmaterials bildet letztlich eine Schweißnaht 8 zwischen zu verschweißenden Werkstücken 9.

Zur Funktion und zum weiteren Verständnis der vorstehend beschriebenen, auf einen bekannten Schutzgasschweißbrenner aufzusetzenden Einheit soll folgendes angemerkt werden: Die durch das Stromkontaktrohr 6 geschobene Draht-Elektrode 7 wird aufgrund ihres Oberflächenkontaktes mit dem Stromkontaktrohr 6 mit den erforderlichen Betriebsparametern (Spannung / Strom) versorgt und schmilzt aufgrund des sich zwischen ihr und den Werkstücken ausbildenden Lichtbogens ab. Dabei wird der Lichtbogen von dem durch die Einzelkanäle 5 der Flachdüse 3 zugeführten Schutzgasstrom nach außen hin geschützt; der seitliche Schutz wird beim sogenannten Engspaltschweißen von den Werkstücken selbst gebildet.

Die soweit beschriebene Schutzgasdüse 1 ist aus der DE-B2- 29 20 917 bekannt.

Gemäß der vorliegenden Erfindung ist die Isolierhülse 4 nicht einstückig, sondern zweiteilig ausgebildet. Über die freie Stirnseite der Flachdüse 3 steht dabei eine an das freie Ende der Draht-Elektrode 7 anschließende Verschleißhülse 11 vor, die auf das Stromkontaktrohr 6 aufgesetzt oder aufgeschraubt ist. Im Inneren der Schutzgasdüse 1 schließt dann die Verschleißhülse 11 an den Isoliermantel 12 an, der bis in den Bereich des zylindrischen Rohransatzes 2 reicht. Die Verschleißhülse 11 und der Isoliermantel 12 bilden somit gemeinsam die Isolierhülse 4, die das Stromkontaktrohr 6 der metallischen Schutzgasdüse 1 gegenüber isoliert.

Wird nun beim Reinigen der Schutzgasdüse 1 die freie Stirnseite dieser Isolierhülse 4 beschädigt, so braucht nurmehr die Verschleißhülse 11 ausgewechselt werden. Um eine einfache Auswechslung zu ermöglichen, ist die Verschleißhülse 11 auf das Stromkontaktrohr 6 aufgeschraubt; es ist jedoch auch möglich, die Verschleißhülse 11 und die Stirnseite der Schutzgasdüse zueinander komplementär so auszubilden, daß die Verschleißhülse 11 rastend einsetzbar ist.

In Fig. 2 ist eine Einzeldarstellung des Stromkontaktrohrs 6 mit der zweiteiligen, aus der Verschleißhülse 11 und dem Isoliermantel 12 bestehenden Isolierhülse 4 dargestellt. Die hier in Fig. 2 dargestellte Einheit wird als vormontierte Baueinheit in eine Schutzgasdüse eingesetzt und mit dem Düsenstock des Schweißbrenners verbunden, insbesondere verschraubt (vergleiche Bezugszeichen 13).

Die Zweiteiligkeit der Isolierhülse ist der eine Aspekt der vorliegenden Erfindung. Ein zweiter Aspekt ist darin zu sehen, daß die Verschleißhülse 11 aus einem keramischen Sonderwerkstoff, insbesondere Bornitrid, besteht, und zwar aus einem Werkstoff der die physikalischen Eigenschaften hohe Temperaturfestigkeit, gute Wärmeleitfähigkeit, hoher spezifischer Widerstand und geringer dielektrischer Verlustfaktor hat und der von vornherein ein Anbacken von Schweißspritzern an der Verschleißhülse 11 verhindert. Damit ist gewährleistet, daß Arbeitsunterbrechungen aufgrund von an der Stirnseite der Isolierhülse anhaftenden Schweißperlen ausbleiben.

Diesem sonderkeramischen Konstruktionswerkstoff entsprechend kann auch die Oberfläche der Schutzgasdüse 1 im Bereich ihrer freien Stirnseite mit einem Oberflächenschutz versehen werden, der als Verschleißschutz dient und Schweißspritzer abweist. Ein derartiger Oberflächenschutz kann beispielsweise ebenfalls durch eine Beschichtung aus Bornitrid oder aus chemischer Vernickelung oder mittels einer plasmaphysikalischen Oberflächenbehandlung erreicht werden.

Gegebenenfalls kann in die oder an die Stirnseite der Schutzgasdüse 1 auch ein deren Form angepaßtes Formteil aus dem genannten keramischen Sonderwerkstoff, z.B. Bornitrid, eingefügt werden. Dieses Formteil weist dann eine Zentralbohrung für die Draht-Elektrode 7, sowie eine Mehrzahl randseitiger und innenliegender Durchgänge für das Schutzgas auf. Dieses Formteil kann gegebenenfalls mit der Verschließhülse 11 einstückig ausgebildet sein.

In Weiterbildung der vorliegenden Erfindung kann - insbesondere bei Schutzgasdüsen für normale Schweißanwendungen - d.h. für runde Schutzgasdüsen an der Stirnseite auch ein separater Verschleißeinsatz 14 eingesetzt werden - vergleiche Fig. 3. Dieser Verschleißeinsatz 14 besteht dann ebenfalls aus z.B. Bornitrid, d.h. einem Werkstoff mit den vorgenannten physikalischen Eigenschaften, so daß im Kreisring zwischen der Verschleißhülse 11, der Isolierhülse 4 und der Innenseite der Schutzgasdüse 1, d.h. ihrer Stirnseite, à priori keine Schweißspritzer anbacken können. Dieser Verschleißeinsatz 14 wird - wie in Fig. 3 dargestellt - vorzugsweise über zueinander komplementäre Rast- und Federmittel 15/16 eingesetzt. Der genannte Verschleißeinsatz 14 kann in Verbindung mit der Verschleißhülse 11 auch als eine Art Topfeinsatz realisiert sein, wobei dann der Verschleißeinsatz 14 ein innenliegendes Bodenteil aufweist, das die Verschleißhülse 11 trägt.

In Verbindung mit Schutzgasdüsen der gattungsgemäßen Art traten bei längeren Stromkontaktrohren, die wie bereits erwähnt, den Stromübergang für die axial schiebende Draht-Elektrode 7 vermitteln, Probleme aufgrund der inneren Reibungs-Widerstände an den Berührungspunkten zwischen der Drahtoberfläche und der Rohrrandung des Kontaktrohrs auf. Dies führt hin und wieder zu Störungen des Drahtvorschubes in der inneren Kanalbohrung, und damit beispielsweise zum Stottern der Draht-Elektrode. Dieses Problem wird - vergleiche Fig. 2 - in weiterer Ausgestaltung der vorliegenden Erfindung dadurch gelöst, daß im Zuführungsteil des Stromkontaktrohrs 6 eine größere Bohrung vorgesehen ist, in die eine weitere isolierende Hülse 19 aus technischem Keramikwerkstoff eingeführt und arretiert (vergleiche 13') ist. Dadurch ergibt sich innerhalb des Stromkontaktrohrs 6 ein längerer isolierender Weg, der eine optimale Führung der Draht-Elektrode 7 gewährleistet.

Eine weitere Verringerung des Reibungswiderstands zwischen der Draht-Elektrode 7 und dem Stromkontaktrohr 6 ist dadurch ferner dadurch erreichbar, daß in den Verlauf zwischen der isolierenden Hülse 19 und der der Verschleißhülse 11 gegenüberliegenden Stirnseite eine Aussparung 20 vorgesehen ist. Damit kann in diesem Bereich der zur Stromübertragung vom Stromkontaktrohr 6 zur Draht-Elektrode 7 vorhandene und erforderliche Krümmungsradius der Draht-Elektrode 7 besser, weil eben wesentlich reibungsfreier, vorbei gleiten.

## Patentansprüche

1. Schutzgasdüse (1) für einen Schutzgasschweißbrenner, mit einem sich bis in die Nähe einer abschmelzenden Draht-Elektrode (7) erstreckenden und diese führenden Stromkontaktrohr (6), und einer auf dem Stromkontaktrohr vorgesehenen Isolierhülse (4)
dadurch gekennzeichnet,
daß die Isolierhülse (4) zweigeteilt ist, und zwar in Form
einer an das abschmelzende Elektrodenenede anschließenden auswechselbaren Verschleißhülse (11) und einem zum Inneren der Schutzgasdüse hin liegenden, an die Verschleißhülse (11) anschließenden zweiten Isoliermantel (12).

2. Schutzgasdüse nach Anspruch 1
dadurch gekennzeichnet,
daß die Verschleißhülse (11) aus einem Keramikwerkstoff mit hoher Temperaturfestigkeit, guter Wärmeleitfähigkeit, hohem spezifischen Widerstand und geringem dielektrischen Verlustfaktor, insbesondere aus Bornitrid, besteht, der von vornherein ein Anbacken von Schweißspritzern nicht zuläßt.

3. Schutzgasdüse nach Anspruch 1 oder 2
dadurch gekennzeichnet,
daß die Verschleißhülse (11) und der Isoliermantel (12) lösbar miteinander verbunden sind.

4. Schutzgasdüse nach Anspruch 1 oder 2
dadurch gekennzeichnet,
daß die Verschleißhülse (11) lösbar mit der Schutzgasdüse (1) verbunden ist.

5. Schutzgasdüse nach einem der Ansprüche 1 bis 4
dadurch gekennzeichnet,
daß zumindest im Bereich ihrer die Draht-Elektrode (7) freigebenden Stirnseite eine Schweißspritzer abweisende Oberflächenbeschichtung aufgebracht ist, die beispielsweise in Form einer chemisch aufgebrachten Vernickelung oder einer plasma-physikalisch vergüteten Oberfläche vorliegt.

6. Schutzgasdüse nach einem der Ansprüche 1 bis 4
dadurch gekennzeichnet,
daß im Bereich ihrer die Drahtelektrode (7) freigegebenen Stirnseite ein Verschleißeinsatz aus einem Keramikwerkstoff mit hoher Temperaturfestigkeit, guter Wärmeleitfähigkeit, hohem spezifischen Widerstand und geringem dielektrischen Verlustfaktor, insbesondere aus Bornitrid, vorgesehen ist, der von vornherein ein Anbacken von Schweißspritzern nicht zuläßt.

## Claims

1. Inert gas jet for an inert gas torch with a flow contact pipe extending close to a melt-stock wire electrode which it guids and an insulating envelope designed on the flow contact pipe
characterised by the fact
that the insulating envelope is divided into two parts in the form of
an exchangeable wear envelope adjacent to the melt-stock electrode anode and a second insulation jacket located towards the interior of the inert gas jet and adjacent to the wear envelope.

2. Inert gas jet according to claim 1 characterised by the fact
that the wear envelope consists of a ceramic material, especially boron nitride, with high temperature resistance, high thermal conductivity, high specific resistance an low dielectric loss factor which right from the beginning does not allow any caking of weld chips.

3. Inert gas jet according to claims 1 or 2 characterised by the fact
that the wear envelope and the insulation jacket are detachably interconnected.

4. Inert gas jet according to claims 1 or 2
characterised by the fact
that the wear envelope and the inert gas jet are detachably interconnected.

5. Inert gas jet according to one of the claims
1 to 4
characterised by the fact
that a surface coating, deflecting weld chips, is applied at least within the section of its face releasing the wire electrode, whereby this coating may, for example, exist in the form of a chemically applied nickel plating or plasma-physically hardened and tempered surface.

6. Inert gas jet according to one of the claims
1 to 4
characterised by the fact
that a wear insert made of ceramic material especially boron nitride, with high temperature resistance, high thermal conductivity, high specific resistance and low dielectric loss factor is designed within the secion of its face releasing the wire electrode which right from the beginning does not allow any caking of weld chips.

## Revendications

1. Tuyère à gaz inerte pour une torche à souder au gaz inerts,
avec un tube conducteur-électrique, qui dirige le fil
électrode et qui s'étend jusqu'à
proximité de l'endroit de la fusion,
ainsi qu'avec une douille isolante prévue surle tube conducteur,
caractérisée en ce que
la douille isolante est en deux parties, à savoir une douille d'usure remplacable s'étendant jusqu'à l'électrode fondante, et
une seconde chemise isolante, s'étendant jusqu'à l'intérieur de la tuyére à gaz inerte, et
adjacante à la douille d'usure.

2. Tuyère à gaz inerte suivant revendication 1, caractérisée en ce que
la douille d'usure est constituée d'un matériau en céramique à haute résistance aux températures élevées, à bonne conductivité thermique
à haute résistivité électrique,
à faible facteur de perte diélectrique, constituée en particulies de nitrure de bore, qui
permet d'éviter le collage des projections métalliques.

3. Tuyère à gaz inerte suivant revendication 1) ou 2), caractérisée en ce que
la douille d'usure et la chemise isolante sont reliées entre elles de facon détachable

4. Tuyère à gaz inerte suivant revendication 1 ou 2, caractérisée en ce que
la douille d'usure est attachée à la tuyère de gaz inerte de facon détachable

5. Tuyère à gaz inerte suivant une des revendications 1 à 4, caractérisée en ce que
du moins dans la région de sortie du fil d'électrode, il y a un revétement de la surface frontale, permettant d'évitar l'accrochage des projections métalliques, par
exemple sous formed'un nickelage par voie chimique ou d'un revétement apporté
par voie physique tel un plasma

6. Tuyère à gaz inerte suivant une des revendications 1 à 4, caractérisée en ce que dans la région de sortie du fil d'électrode, il est prévu un insert d'usure, constitué d'un matériau en céramique à haute résistance aux températures élevées,
à bonne résistivité électrique, à haute résistance spécifique, à faible facteur de perte diélectrique, constitué en particulier
de nitrure de bore, qui permet d'éviter le collage des projections métalliques.
